# EUROPEAN PATENT APPLICATION

(11) **EP 4 173 858 A1**
(43) Date of publication of application: **03.05.2023**
(21) Application number: 22203501.6
(22) Date of filing: 25.10.2022
(51) Int. Cl.: B60G 21/055, B60K 1/02, B60K 7/00, B60G 11/46

(54) **SUSPENSION SYSTEM OF A COMMERCIAL VEHICLE**

(30) Priority: 29.10.2021 IT 202100027863
(71) Applicant: IVECO S.P.A., 10156 Torino (IT)
(72) Inventor: PEREIRA DE LEMOS, José Francivaldo, 10156 TORINO (IT); LIGA, Valerio, 10156 TORINO (IT)
(74) Representative: Studio Torta S.p.A.

(57) **Abstract**

A suspension system (1) for a commercial vehicle configured to connect an axle (2) to a chassis (3) comprising a longitudinal element (7; 19), a shock absorber (21), a transverse retaining element (25), and a stabilizer bar (35)
wherein said stabilizer bar (35) is arranged below the axle (2) and comprises a central portion (35a), a pair of end portions (35e), and a pair of intermediate portions (35c), the end portions (35e) being rotatably connected to the axle (2) and the intermediate portions (35c) being movably connected to the chassis (3).

## Description

### CROSS-REFERENCE TO RELATED APPLICATIONS

This patent application claims priority from Italian patent application no. 102021000027863 filed on October 29, 2021, the entire disclosure of which is incorporated herein by reference.

### TECHNICAL FIELD

This invention relates to a suspension system of a commercial vehicle, in particular a suspension system of a commercial vehicle equipped with electronic traction.

### BACKGROUND OF THE INVENTION

Commercial vehicles are increasingly electrified to reduce their polluting emissions. In particular, these vehicles may be hybrid vehicles or purely electric ones.

In particular, electrified vehicles comprise at least one rear electric drive axle, i.e., a rear drive axle provided with electric machines such as, for example, motors/generators configured to impart torque to the axle to enable it to move or to recharge battery modules of the vehicle when the latter is braking.

These battery modules are usually arranged near the electric machines of the electric axle to provide an efficient exchange of power with the electric machines.

However, as known, an axle of a vehicle is connected to the chassis of the latter via a suspension system configured to dampen the forces that act between the road and the chassis.

If a vehicle is equipped with an electric axle as described above, the presence of the electric batteries increases the bulk around the chassis. In addition, the presence of the electric motors increases the oscillating weight of the axle, so that the performance of known suspension systems is not sufficient for the purpose.

As a result, known suspension systems for heavy vehicles are not suitable due to the presence of the electric axle.

Therefore, the need is felt to provide a new arrangement of a suspension system that may be assembled on an electric axle and that provides at least the same mechanical properties as known suspension systems.

One goal of this invention is to meet the needs mentioned above in a compact, optimised, and cost-effective manner

### SUMMARY OF THE INVENTION

The above-mentioned goal is achieved with a vehicle as claimed in the attached independent claims.

Preferred embodiments of the invention are provided according to the dependent claims or those related to the above-mentioned independent claims.

### BRIEF DESCRIPTION OF THE DRAWINGS

For a better understanding of this invention, a preferred embodiment is described below, by way of nonlimiting example, and with reference to the accompanying drawings, wherein:
- Figure 1A is a perspective view of a portion of vehicle equipped with a suspension system according to a first embodiment of a suspension system according to this invention;
- Figure 1B is a perspective view of a portion of a vehicle equipped with a suspension system according to a second embodiment of a suspension system according to this invention;
- Figure 2A is a perspective view of a first embodiment of a suspension system according to this invention;
- Figure 2B is a perspective view of a second embodiment of a suspension system according to this invention;
- Figures 3A and 3B are plan views from above of the suspension systems in Figures 2A-2B;
- Figures 4A and 4B are plan views from below of the suspension systems in Figures 2A-2B; and
- Figures 5A and 5B are side views of the suspension systems in Figures 2A-2B.

### DETAILED DESCRIPTION OF THE INVENTION

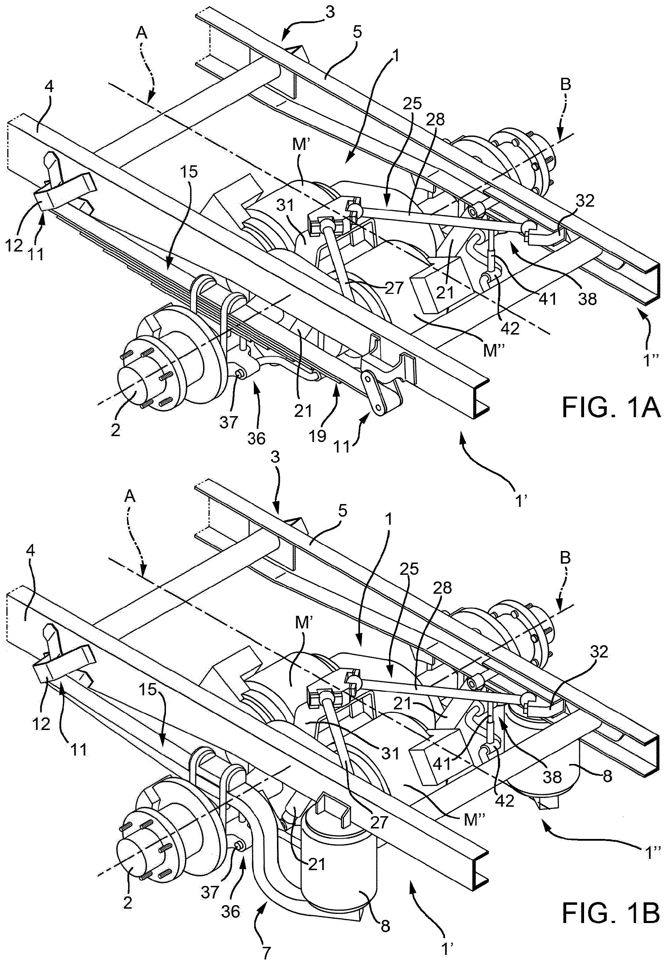

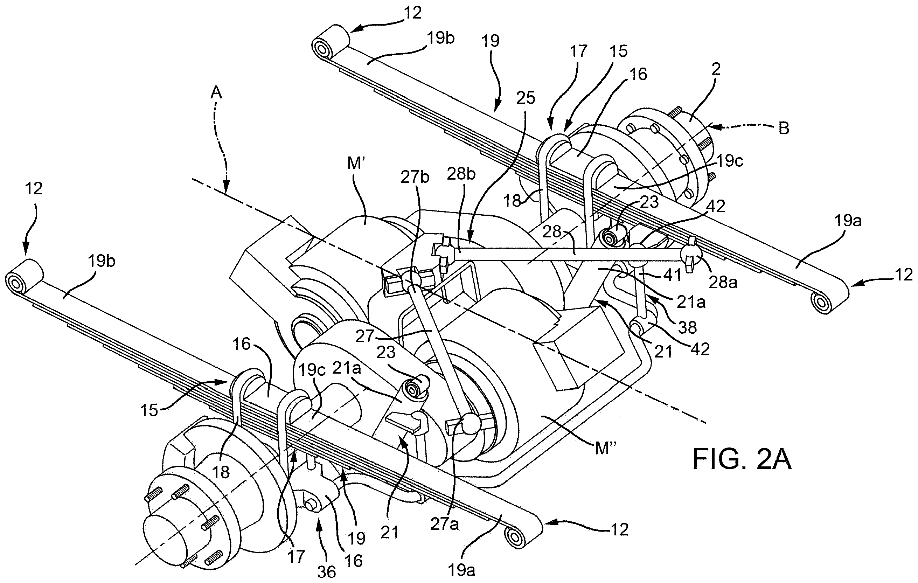

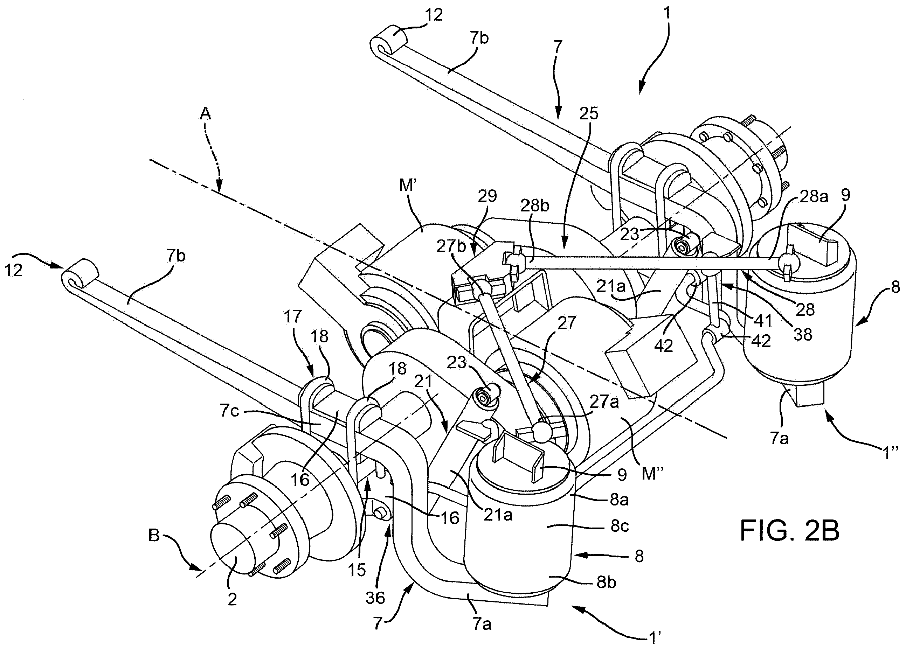

Figures 1 and 2 illustrate two different embodiments of a suspension system 1 to connect an axle 2 of a commercial vehicle to its chassis 3.

The chassis 3 comprises, as known, a pair of side members 4, 5 that extend along a longitudinal axis A of the vehicle and are spaced apart transversely between them. It is evident that the suspension system 1 can be designed for a commercial vehicle comprising a front axle (not shown) and at least one rear axle 2.

It should be noted, in particular, how the axle 2 has electric traction, i.e., is equipped with electric machines M', M" that are powered by at least one battery module (not illustrated) to provide torque to the wheels (not illustrated) supported by the axle 2 or to receive electricity generated by the electric machines M', M" when the vehicle is braking.

Given the presence of these electric machines M', M", the axle 2 extends in the space comprised, laterally, between the side members 4, 5 along the axis A, both in front of and behind a longitudinal axis B of the axle 2 that is transverse, in particular perpendicular, to the longitudinal axis A of the vehicle.

It should be noted, in particular, that the suspension system 1 comprises a left side 1" and a right side 1'. Since the left side 1" and the right side 1' are symmetrically equal to the longitudinal axis A, for brevity, the suspension system 1 will be described below by referring just to the right side 1' alone.

The two embodiments described below differ by the different type of longitudinal retaining element as described below.

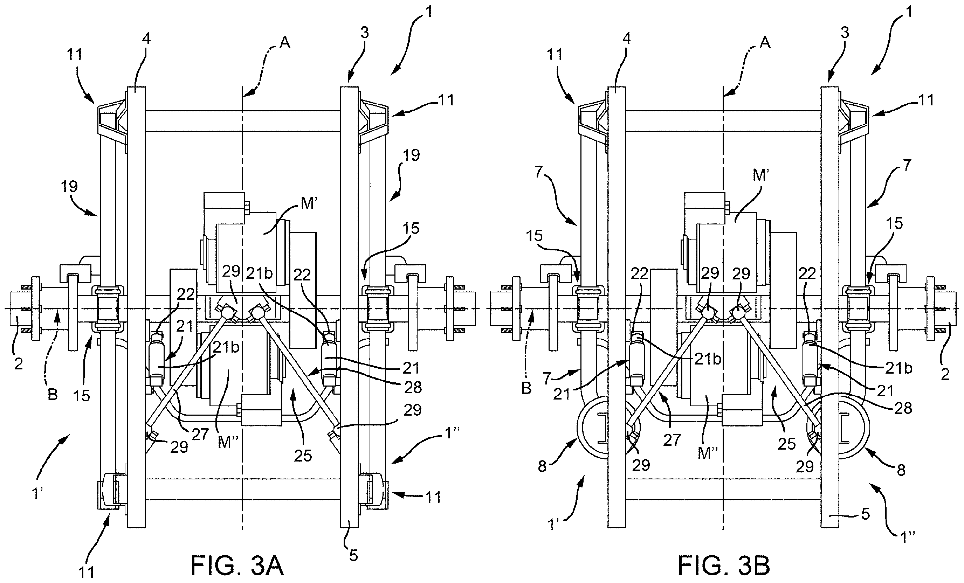

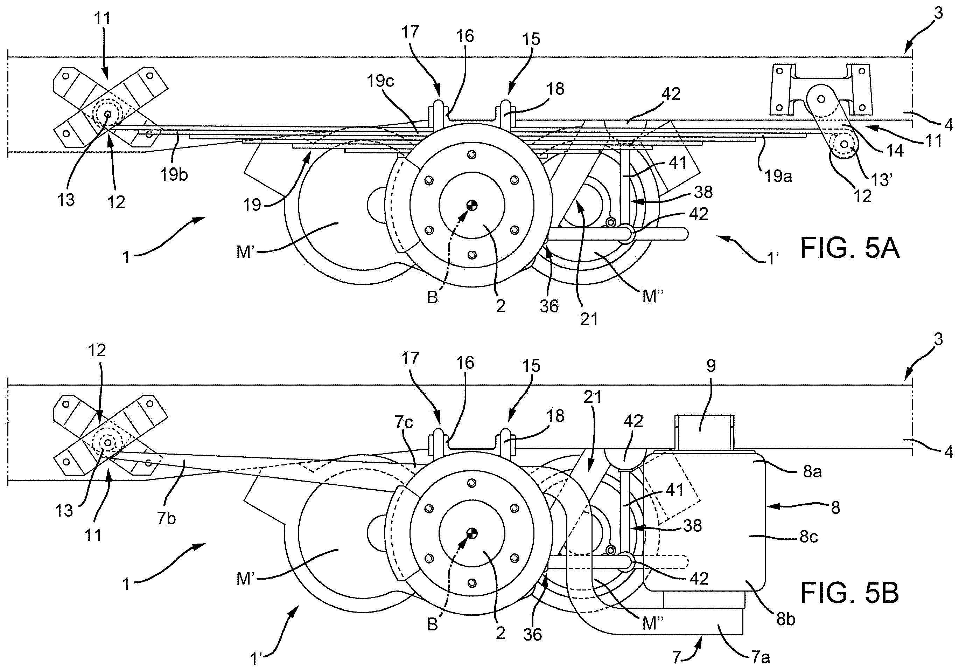

With reference to Figures 2B, 3B, 4B, 5B, the suspension system 1 comprises a metal cross member 7, or an elastic cross member, comprising a front portion 7a and a rear portion 7b that extend along the longitudinal axis A. The metal cross member 7 is connected to the axle 2, as described below, in an intermediate portion 7c longitudinally comprised between the front and rear end portions 7a, 7b.

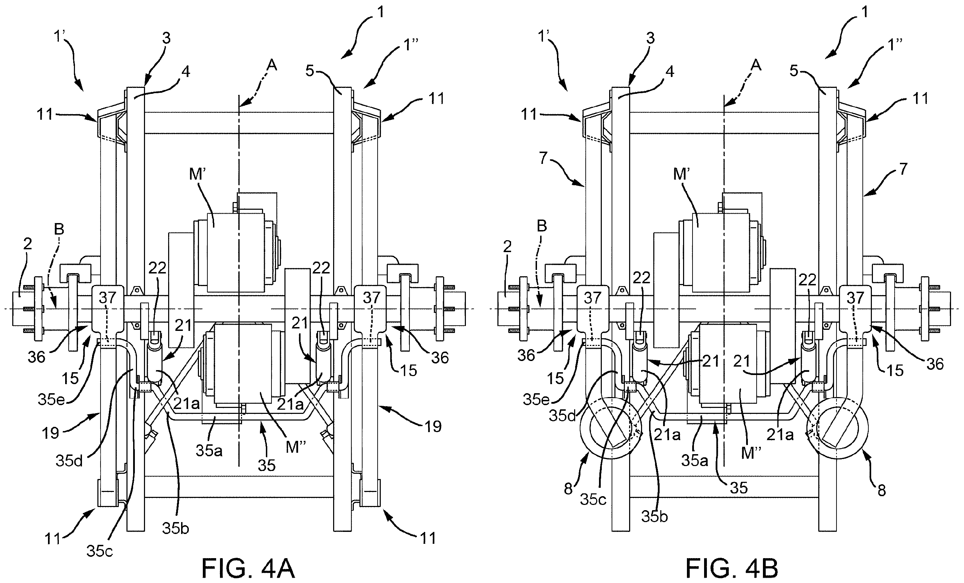

In particular, the metal cross member 7 is shaped so that the front portion 7 is vertically lower than the rear portion 7b and the intermediate portion 7c, which are, instead, basically vertically aligned. In addition, as is clearer in Figure 4B, the front portion is also tilted in relation to the rear 7b and the intermediate 7c portions that are aligned. In particular, the front portion 7a is tilted in relation to the axis A so that it is directed towards the corresponding side member 4.

It should also be noted that the metal cross member 7 is housed outside the space comprised by the side members 4,5, except for the front portion 7a that ends at the corresponding side member 4.

The metal cross member 7 preferably consists of a single piece, made of metal with a rectangular cross-section. More preferably, the thickness of this rectangular cross-section in the vertical direction is variable by a minimum at the rear portion 7b and a maximum at the front portion 7a.

Advantageously, the front portion 7a is connected to the chassis 3, i.e., to the side member 4, via pneumatic suspension such as, for example, a bellows 8 positioned in a vertical direction between the chassis 3 and the metal cross member 7.

In particular, the bellows 8 comprises an upper portion 8a configured to be connected to the chassis 3, for example via a bracket 9, and a lower portion 8b that is connected, for example via a threaded element, to the corresponding front portion 7a. As known, each bellows 8 comprises an air bearing 8c supported by the upper and lower portions 8a, 8b and configured to house pressurised air to dampen relative movements between these upper and lower portions 8a, 8b.

Advantageously, the rear portion 7b is connected to the chassis 3, i.e., to the side member 4, via a mechanical coupling 11, advantageously a mechanical coupling of the type that moves between a hooked end portion 12 of the rear portion 7b configured to be hinged in a pin 13 that is integral with the side member 4.

The metal cross member 7 is connected to the axle 2 via a connection group 15 comprising, preferably, at least one plate 16 placed vertically between the axle 2 and the intermediate portion 7c of the metal cross member 7. In the case illustrated, there is a first plate placed above the axle 2 and a second plate placed below the axle 2 between this and the metal cross member 7.

The connection group 15 comprises, in addition, holding means 17 configured to exert a compression force between the axle 2, the at least one plate 16, and the metal cross member 7 so as to keep the latter connected together via friction.

In particular, the holding means 17 may comprise two "U" shaped brackets 18 equipped with threaded ends configured to pass around the intermediate portion 7c of the metal cross member 7 and threaded elements configured to cooperate with these threaded ends to exert the compression force between the above-mentioned elements.

With reference to Figures 2A, 3A, 4A, 5A, the suspension system 1 comprises a leaf spring 19, advantageously of the semi-elliptical type, comprising a front portion 19a and a rear portion 19b extending along the longitudinal axis A. The leaf spring 19 is connected to the axle 2, as described below, in an intermediate portion 19c longitudinally comprised between the front and rear portions 19a, 19b.

The rear and front portions 7a, 7b are preferably each connected to the chassis 3, i.e., to the side member 4, via a mechanical coupling 11, advantageously a mechanical coupling of the type that moves between a respective hooked end portion 12 configured to be hinged in a pin 13 that is integral with the side member 4. More specifically, it should be noted how the hooked end portions 12 of the front and rear portions 7a, 7b are vertically opposite each other.

In addition, it should be noted how the mechanical coupling 11 between the front portion 19a and the side member 4 comprises a mobile pin 13' dragged by a connecting rod 14 hinged to the side member 4. In particular, the connecting rod 14 is hinged to the side member 4 on the side opposite the mobile pin 13' so as to enable the rotation of the mobile pin 13' around an axis parallel to the axis B.

The leaf spring 19 is, in addition, connected to the axle 2 via a connection group 15 that is similar to that of the first embodiment and, thus, not additionally described, for brevity.

It should be additionally noted how the leaf spring 19 is housed entirely outside the space comprised by the side members 4, 5.

In both embodiments, the suspension 1 also comprises a shock absorber 21 placed along the above-mentioned vertical direction between the axle 2 and the chassis 3, i.e., the side member 4. In particular, the shock absorber 21 is inclined in relation to the vertical in relation to the side member 4/to the ground by an angle of approximately 45°.

The shock absorber 21 is preferably a hydraulic shock absorber, i.e., a cylinder, comprising a housing 21a that is supported by the side member 3 and a rod 21b that is connected to the axle 2. As known, the rod 21b is configured to move inside the housing 21a against the action of a fluid contained in the housing 21a to dampen the relative movement between the side member 4 and the axle 2.

The rod 21b is connected between the chassis 2 and the side member 4 along the axis B in a portion comprised between the coupling with the metal cross member 7/leaf spring 19 and one of the electric machines M', while it is fixed to the side member 4, along the direction of the axis A in a portion corresponding to that of the front portion 7a/19a of the metal cross member 7/leaf spring 19.

In particular, the rod 21b is connected to the axle 2 via a hinge 22 connection configured to enable a rotation of the end portion of the rod 21b around an axis parallel to a transverse axis B. The housing 21a is connected, in contrast, to the side member 4 via a hinge 23 connection configured to enable a rotation of the end portion of the housing 21a around an axis parallel to the axis B.

The suspension system 1 also comprises a transverse retaining element 25 configured to support transverse movements that act between the axle 2 and the chassis 3 but that enables a vertical movement between these latter elements.

In particular, the transverse retaining element 25 comprises a first arm 27 and a second arm 28. Each of the arms 27, 28 comprises a front portion 27a, 28a and a rear portion 27b, 28b connected, respectively, to the axle 2 and to a side member 4, 5. In particular, this connection of the arm 27, 28 portions comprises a hinge 29 connection.

Specifically, the first and second arm 27, 28 are connected so that the rear portions 27b, 28b are adjacent to each other and connected to a basically central portion of the axle 2 along the axis B, while the front portions 27a, 28a are spaced apart along the axis B. Thus, the first and second arm 27, 28 are inclined on a horizontal plane in relation to the longitudinal axis. More specifically, the two arms 27, 28 are symmetrically arranged with respect to the longitudinal axis A.

Specifically, the hinge 29 connections are made on corresponding flanges 31, 32 carried, respectively, by the axle 2 and the side members 4, 5. Specifically, the flange 31 carried by the axle 2 is placed between the electric machines M', M" along the axis A.

The suspension system 1 also comprises a stabilizer bar 35 configured to dampen any torque that acts between the axle 2 and the chassis 3.

The stabilizer bar 35 basically comprises (as shown better in Figures 4A/4B) a segmented shape that is concave towards the electric machines M', M"; preferably, this segmented shape is symmetrical in relation to the longitudinal axis A. In addition, the stabilizer bar 35 is arranged below the axle 2 and the metal cross member 7/leaf spring 19.

Going into more detail, the stabilizer bar comprises:
- a central portion 35a extending parallel to the axis B for the extension of the electric machines along this axis,
- a pair of inclined portions 35b extending from the side ends of the central portion 35a and inclined in relation to the axis A, preferably by approximately 45°,
- a pair of intermediate portions 35c extending from the side end of the inclined portions 35b and parallel to the central portion extending at one corresponding side member 4, 5;
- a pair of longitudinal portions 35d extending from the side end of the intermediate portions 35c parallel to and at the side members 4.5;
- a pair of end portions 35e extending from the rear end of the longitudinal portions 35d, advantageously parallel to the central portion 35a.

The stabilizer bar 35 is advantageously connected to the axle 2 at the end portions 35e via a mobile connection 36 and at the corresponding side member 4, 5 at the intermediate portions 35d via a connection group 38.

In particular, the mobile connection 36 comprises a hinge 37, preferably made in one of the plates 16 of the connection group 15.

The connection group 38 (more clearly visible in Figures 2A/2B, 4A/4B) is configured to make a rotating movement around an axis parallel to the transverse axis B and preferably comprises a connection element 41 equipped with a lower end connected to the end portion via a hinge 42 and an upper end connected to the chassis 3 via an additional hinge 42. The hinges 42 are both configured to enable a rotation around an axis parallel to the transverse axis B.

A hinge 42 is preferably made between the upper end of the connection element 41 and a corresponding side member 4, 5 while the other hinge 42 is made between the lower end of the connection element 41 and the intermediate portion 35c of the torsion bar 35.

In particular, it should be noted how the upper hinge 42 is made on a portion vertically below the side member, so that, in a rest condition, the connection element 41 is basically vertical to the ground.

It should also be noted that the connection element 41 is placed, along the axis B, below the side member 4, 5, thus between the metal cross member 7/leaf spring 19, and the shock absorber 21.

It is clear that the suspension system 1 may comprise additional elements not described here and designed to enable the assembly/arrangement of the elements mentioned above and not described for brevity.

The operation of the suspension system 1 described above is the following.

During the movement of the vehicle, the at least one axle 2 follows the roughness of the road and may move in relation to the chassis 3 of the vehicle. In particular, in addition, the torque for moving the vehicle is provided by at least one of the electric motors M', M" .

These movements are dampened by the suspension system 1, in particular:
- the vertical movements are dampened by the shock absorbers 21 and by the pneumatic suspensions 8 (or, instead of the pneumatic suspension, by the leaf spring 19) .
- the transverse movements are compensated for by the transverse retaining element 25 and by the metal cross member 7/leaf spring 19;
- the transverse movements are compensated for by the transverse retaining element 25 and by the torsional bar 35; and
- the torque movements are compensated for by the stabilizer bar 35.

In light of the above, the advantages of the suspension system described above, according to the invention, are clear.

The suspension system 1 proposed, in particular the position of the stabilizer bar 35 and its shape, enables the assembly of the suspension 1, including in the case of an electric axle 2, maintaining, at the same time, excellent mechanical properties.

In addition, the suspension system 1 proposed is particularly compact since the majority of the elements are housed at the side members or outside the space comprised by them, leaving the space comprised by them for the housing of the electric machines M', M".

The peculiar arrangement of the stabilizer bar 35 and its form make it possible to obtain a high oscillation thereof without interfering with the other suspension elements or with the electric motors.

In addition, the stabilizer bar can consist of a single piece, thus, via standard production systems; similarly, the shock absorber 21 or the holding element 24 are standard elements like the hinges or supports mentioned. As a result, the suspension system 1 is particularly cost-effective.

It is clear that alternations may be made to the suspension system that do not extend beyond the scope of protection defined by the claims.

For example, this position and this shape of the elements of the suspension 1 may vary within the limits of the claims attached.

In addition, the suspension system 1 may be provided for front or rear axles configured as a traction or towing axle or as a standard axle.

The fastening means, the hinges and the connections shown and described may vary and be replaced with equivalent means.

## Claims

1. A commercial vehicle comprising an electric drive axle (2) and a suspension system (1) for said axle (2), the chassis (3) of said commercial vehicle comprising a pair of side members (4, 5), said axle (2) extending along an axis transverse (B) with respect to a longitudinal axis (A) of said vehicle,
said suspension system (1) comprising:
• a longitudinal element (7; 19) comprising a front-end portion and a rear end portion (7a, 7b; 19a, 19b) along said longitudinal axis (A) each operatively connected to said chassis (3) and an intermediate portion (7c 19c) included between the latter and connected to said axle (2) ;
• a shock absorber (21) operatively interposed between said axle (2) and said chassis (3);
• a transverse retaining element (25) operatively interposed between the axle (2) and said chassis (3); and
• a stabilizer bar (35) operatively interposed between said axle (2) and said chassis (3),
wherein said stabilizer bar (35) is arranged under said axle (2) and comprises a central portion (35a), a pair of end portions (35e) and a pair of intermediate portions (35c),
said end portions (35e) being rotatably connected to said axle (2) and said intermediate portions (35c) being movably connected to said chassis (3).

2. - The vehicle according to claim 1, wherein said central portion (35a) is straight and parallel to said axis (B) .

3. **-** The vehicle according to claim 1 or 2, in which said intermediate portions (35c) are straight and parallel to said central portion (35a).

4. **-** The vehicle according to claim 1 to 3, in which said end portions (35e) are straight and parallel to said central portion (35a).

5. **-** The vehicle according to one of claims 1 to 4, in which said chassis (3), said intermediate portions (35c) are arranged in correspondence with said side members (4, 5).

6. **-** The vehicle according to one of claims 1 to 5, wherein said stabilizer bar (35) comprises a pair of inclined portions (35b) placed between said intermediate portions (35c) and said central portion (35a).

7. **-** The vehicle according to one of claims 1 to 6, wherein said stabilizer bar (35) comprises a pair of longitudinal portions (35d) parallel to said longitudinal axis (A) and placed between said intermediate portions (35c) and said end portions (35e).

8. **-** The vehicle according to one of the preceding claims, wherein said intermediate portion (7c; 19c) is connected to said axle (2) by means of a connection group (15), said connection group (15) comprising at least one plate (16) in contact with said axle (2) and holding means (17) configured to provide a compressive force between the axle (2), said at least one plate (16) and said longitudinal element (7; 19), said end portions (35e) of said stabilizer bar (35) being connected to a plate (16) placed under said axle (2).

9. **-** The vehicle according to one of the preceding claims, in which said end portions (35e) are hinged to said axle (2).

10. **-** The vehicle according to one of the preceding claims, in which said intermediate portions (35c) are connected to said chassis (3) by means of a connection assembly (38) comprises a connection element (41) provided with opposite ends respectively hinged by means of hinges (42) on said intermediate portions (35c) and on said chassis (3) .

11. **-** The vehicle according to one of the preceding claims, wherein said longitudinal element comprises an elastic cross member (7) connected to said rear end (7b) by means of a mobile connection (11) and connected to said front end (7a) by means of a pneumatic suspension (8).

12. **-** The vehicle according to claim 11, wherein said rear end (7b) is placed vertically above said axle (2) while said front end (7a) is placed vertically below said axle (2) .

13. **-** The vehicle according to one of the preceding claims, wherein said longitudinal element comprises a leaf spring (19) connected to said front and rear ends (19a, 19b) by means of a movable connection (11).

14. The vehicle according to any one of the preceding claims, wherein said shock absorber (21) comprises a hydraulic cylinder which is hinged through respective hinges (22, 23) at its ends on said chassis (3) and on said axle (2) .

15. The vehicle according to any one of the preceding claims, wherein said transverse retaining element (25) comprises a first and a second arm (27, 28) comprising first ends connected to each other and hinged on said chassis (3) and second ends hinged each on the top of said axle (2), said hinges (29) allowing a movement of the respective ends around respective axes parallel to said transverse axis (B).
